(19) **Europäisches Patentamt**

**European Patent Office**

**Office européen des brevets**

(11) **EP 1 462 265 A2**

(12) **EUROPEAN PATENT APPLICATION**

(43) Date of publication:
29.09.2004 Bulletin 2004/40

(51) Int Cl.7: **B41J 2/447**

(21) Application number: **04006902.3**

(22) Date of filing: **23.03.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **28.03.2003 JP 2003092497**

(71) Applicant: **KONICA MINOLTA HOLDINGS, INC.**
**Tokyo 100-0005 (JP)**

(72) Inventors:
• **Nakahanada, Manabu**
**2907 Ishikawamachi Tokyo 192-8505 (JP)**
• **Hattori, Tsuyoshi**
**2970 Ishikawamachi Tokyo 192-8505 (JP)**
• **Sato, Takeharu**
**1 Sakura-machi, Hino-shi, 191-8511 Tokyo (JP)**

(74) Representative:
**Gille Hrabal Struck Neidlein Prop Roos**
**Patentanwälte,**
**Brucknerstrasse 20**
**40593 Düsseldorf (DE)**

(54) **Image forming apparatus and image forming method**

(57) An image forming apparatus having: a print head provided with plural recording elements arranged in an array, each of the recording elements being operated based on respective correction coefficient of light amount; and an image reading apparatus for reading an image; wherein, an image for correction is recorded onto the photosensitive material by the print head, read information D (i) of the image for correction is acquired (where, "i" is a number indicating an order of each recording element) by the image reading apparatus, a correction amount C (i) for a recording characteristic of each recording element is acquired based on the read information D (i), and an image is recorded by using the correction amount C (i); wherein, the correction amount C (i) is acquired by using the read information D (i) and read information D (k) (where, "k" is a different number from "i").

**EP 1 462 265 A2**

## Description

## BACKGROUND OF THE INVENTION

The present invention relates to an image forming apparatus and an image forming method.

Following upon the recent spread of a digital camera, there is a strong demand for improvements of efficiencies such as printing power and image quality of a digital minilab photo-equipment serving as an image forming apparatus. In particular, the demand for large-sized prints is high, and there have been reported many of developments of exposure engines each employing a print head on which a plurality of light-emitting recording elements suitable for the large-sized print are arranged in an array form.

In the recording elements stated above, light-emitting characteristic of each recording element is fluctuated in general. When correction of the variation is insufficient, the variation is recorded undesirably as it is as density unevenness when a print is made, resulting in a serious decline of a commercial value of a digital output image.

The recording element usually has variation of 20% - 40%, and when trying to reproduce a photograph in continuous tone, it is necessary to correct the variation by lowering it to the value of at most 2% or less, and when trying to acquire higher quality, it is necessary to correct the variation by lowering it to the lower value of 1% or less. Technologies concerning this correction are disclosed in Patent Documents 1 - 3.

(Patent Document 1)

TOKKAIHEI No. 8-230235

(Patent Document 2)

TOKKAIHEI No. 9-131918

(Patent Document 3)

TOKKAIHEI No. 10-811

(Problems to be solved by the invention)

It is no doubt possible to lower variation of light-emitting characteristics of each recording element by employing the aforementioned conventional technologies. However, it is not possible to eliminate density unevenness thoroughly, and reduction of variation is somewhat insufficient for density unevenness of high-frequency components in particular, and technologies to overcome this problem are not described at all in the aforementioned documents.

As one of the reasons why the aforementioned problem cannot be solved by the aforementioned conventional technologies alone, there is given the case where a pixel of each recording element recorded on a photosensitive material is overlapped on a pixel of another recording element. It is considered that this overlapping of pixels makes not only accurate measurement of density information corresponding to each recording element but also accurate feed back to be difficult, and thereby, reduction of density unevenness does not reach a satisfactory level.

On a print head equipped with an array-shaped recording element, recording elements need to be arranged at a certain interval of about 85 μ for 300 dpi, for example, so that recording may be conducted at desired resolution. However, it is extremely difficult to arrange thousands of recording elements accurately within a microscopic error, and there are caused errors of arrangement which cannot be identified at the mere level of visual observation of actual images. Therefore, overlapping of pixels and a degree of influence for adjoining pixels are varied for each recording element, which makes accurate measurement of density and accurate feed back for each recording element to be difficult.

When there is used a print head wherein recording elements are arranged in two rows or three rows in a zigzag form because recording elements each being greater than a pixel pitch are used at desired resolution, the aforementioned matters turn out to be more difficult, because influence of adjoining pixels becomes extremely great.

Further, when a photosensitive material is a silver halide color photo paper, a beam spot is blurred by halation
wherein light transmitted through a photosensitive layer is reflected on a reflection support to expose the photosensitive layer to light, because the reflection support is present in the photo paper. Therefore, the aforesaid difficulty is further increased.

Further, a selfoc lens is frequently used for an image forming optical system of a print head that is equipped with recording elements in an array form, and since a light image composed by each of the selfoc lens is exposed on a photosensitive material, inconsiderable shift of position caused by a curl of a photosensitive material and fluctuation in the course of transport of a photosensitive material have an adverse effect on a deviation of a focal point of a beam spot and on blurring of an image

Since there are so many reasons for overlapping of pixels of each recording element, as stated above, using conventional technologies alone makes it difficult to obtain results of accurate correction of density unevenness.

On the other hand, even when overlapping of pixels is reduced and density corresponding to each recording element is measured accurately, by employing the technology to reduce overlapping of pixels disclosed in the Patent Document 3 stated above, pixels are overlapped in the course of image output, and density is higher than the circumference on the portion where an overlapped area for the pixels is relatively large, while density is lower on the portion where an overlapped area is small, which rather causes possibility of occurrence of density unevenness.

It has been revealed that many number of times of corrections are required to clear the density unevenness, besides that the level of density unevenness is insufficient, when the aforesaid conventional technologies only are used. One of the reasons for the foregoing is considered that an influence of overlapping of images formed by each recording element makes accurate feed back of results of corrections to be difficult.

It is impossible to find out a means to solve the problems mentioned above from the conventional technologies stated alone, and when the situations of the recent minilab stores are taken into consideration, it is difficult to make a workable minilab photoequipment by means of only the conventional technologies.

An object of the invention is to provide an image forming apparatus wherein density unevenness, density unevenness of high-frequency components in particular are reduced effectively, and unevenness-converging speed of the density unevenness is high, and to provide an image forming method.

## SUMMARY OF THE INVENTION

The invention is one to realize vast improvements in density unevenness by taking in an influence of adjoining recording elements positively on an image for correction and thereby by correcting density unevenness. Structures of the invention are not disclosed or suggested in the conventional technologies described above.

The problems stated above can be solved by the invention having the following features.

(1) An image forming apparatus having: a print head comprising a plurality of recording elements arranged in an array, each of the plurality of recording elements being operated based on respective each correction coefficient of light amount; and an image reading apparatus for reading an image recorded on photosensitive material;

wherein, the image forming apparatus records an image for correction onto the photosensitive material by using the print head, acquires read information D (i) of the image for correction recorded (where, "i" is a natural number indicating an arraying order of each of the plurality of recording elements) through the image reading apparatus, acquires a correction amount C (i) for a recording characteristic of each of the plurality of recording elements based on the read information D (i) acquired, and records an image by using the correction amount C (i) acquired;

wherein, the image recording apparatus acquires the correction amount C (i) for the recording characteristic of i-th recording element by using the read information D (i) and read information D (k) corresponding to another one of the plurality of recording elements (where, "k" is a different natural number from "i").

(12) Further, the invention for solving the problem is represented by an image forming method including the steps of: recording an image for correction onto photosensitive material by using a print head comprising a plurality of recording elements arranged in an array, each of the plurality of recording elements being operated based on respective each correction coefficient of light amount; acquiring read information D (i) of the image for correction recorded (where, "i" is a natural number indicating an arraying order of each of the plurality of recording elements) through reading the image; acquiring a correction amount C (i) for a recording characteristic of each of the plurality of recording elements based on the read information D (i) acquired; and recording an image by using the correction amount C (i) acquired;

wherein, the correction amount C (i) for the recording characteristic of i-th recording element is acquired by using the read information D (i) and read information D (k) corresponding to another one of the plurality of recording elements (where, "k" is a different natural number from "i").

## BRIEF DESCRIPTION OF THE DRAWINGS

Fig. 1 is a block diagram showing the structure of an image forming apparatus to which the invention is applied.

Fig. 2 is a block diagram showing more minutely the structure of an image forming apparatus to which the invention is applied.

Fig. 3 is an example of images for correction used in an image forming apparatus to which the invention is applied.

Fig. 4 (a) is an example of images for correction used in an image forming apparatus to which the invention is applied, and Fig. 4 (b) is a diagram showing an enlarged marker section shown in Fig. 4 (a).

Fig. 5 is a flow chart to illustrate image forming processing by an image forming apparatus to which the invention is applied.

Fig. 6 is a flow chart to illustrate processing executed in an example of experiment for an image forming apparatus to which the invention is applied.

Fig. 7(a), 7(b) and 7(c) are diagrams showing schematically a print head wherein recording elements are arranged in an array form.

Fig. 8 is a diagram showing an example of a characteristic curve of a photosensitive material.

Fig. 9 is a diagram showing density unevenness evaluation conducted by an image forming apparatus to which the invention is applied.

Fig. 10 is a schematic diagram illustrating a second image forming apparatus used in the second embodiment of the invention.

## DETAILED DESCRIPTION OF THE PREFERRED EMBODIMENT

Features of the invention will be described in more detail.

In the structure stated above in features of (1) and (12), there is conducted correction of density unevenness wherein an influence of a neighboring recording element is taken in positively on images for correction, and results of the correction are fed back considering the influence of a neighboring recording element, which makes it possible to reduce density unevenness, especially density unevenness of high-frequency components and to raise the unevenness-converging speed (number of correction times is decreased) for density unevenness.

The read information in the invention means information showing optical density which has been read by any of density-measuring means, or numerical information calculated based on optical density, and it may also be optical density itself, reflectance, transmission factor, light absorption factor, functional value in one-to-one correspondence to the foregoing, for example, logarithmic value, or a statistical amount such as the mean value or a correction amount in the invention. Further, when conducting measurement through reading of images by using an image reading apparatus such as a flat-bed scanner, read information may also be a signal value obtained through measurement by an image reading apparatus, a functional value in one-to-one correspondence to the signal value, for example, a logarithmic value, or a relative value of the foregoing.

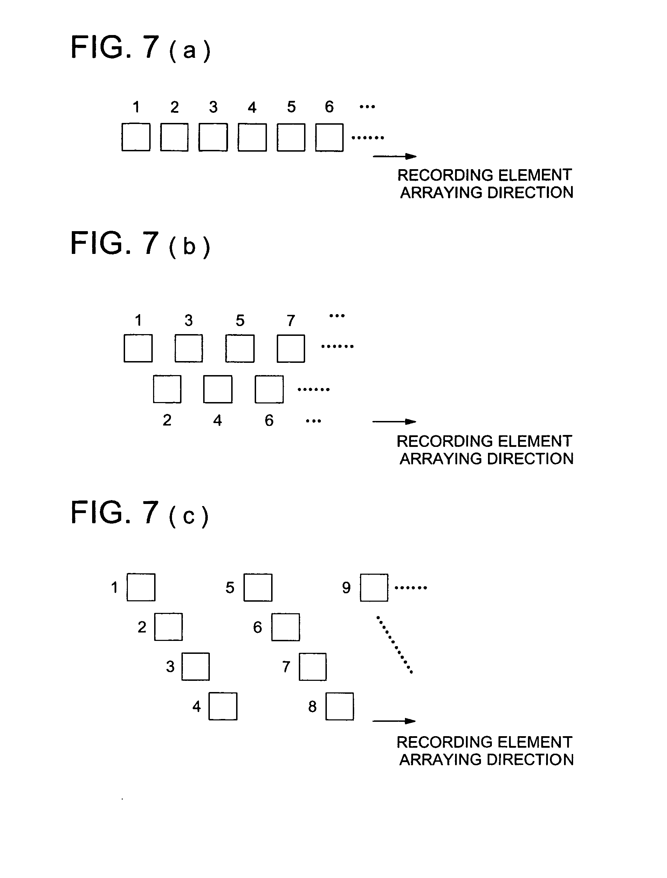

Figs. 7 (a)- 7 (c) show schematically a print head in which recording elements are arranged in an array form. In this case, the array form includes not only a form of a straight line shown in Fig. 7 (a) but also a zigzag arrangement shown in Fig. 7 (b) and an arrangement shown in Fig. 7 (c). Further, in each arrangement, there is assigned to each recording element a number showing an order of arrangement of recording elements illustrated.

A solid image in the invention is an image that is formed when recording elements arranged continuously as shown in Figs. 7 (a)- 7 (c) record on a photosensitive material without placing any intervals. Namely, it is an image that is formed when recording elements in which the numbers each showing an order of arrangement are continuous record on a photosensitive material.

When images for correction in a rectangular form are set in an image reading apparatus, it is preferable, from a viewpoint of improvement in allowance for inclination of images for correction, that a long side of the rectangle is in parallel with the direction of arrangement of light-receiving elements (CCD) of the image reading apparatus.

A print head having thereon recording elements arranged in an array form may be one wherein plural recording elements are arranged in one row or in plural rows at prescribed intervals for obtaining desired resolution, and as a preferable example of the print head having thereon recording elements arranged in an array form, there are given an optical shutter array such as PLZT print head employing those in which LED light-emitting elements or vacuum fluorescent tubes are arranged or employing an appropriate backlight or employing liquid crystal shutter array print head, those on which semiconductor lasers are arranged in an array form, a thermal head, and a light-emitting element utilizing electroluminescence phenomenon such as organic EL material.

Further, an apparatus capable of forming images with plural gradations such as an apparatus to record on a silver halide photosensitive material by using various types of recording element arrays and an apparatus to record with a thermal head by using sublimation ink are especially preferable.

Plural print heads in the case of recording on a photosensitive material by using plural print heads may either be one wherein plural print heads each being for a different color are present, or be one wherein plural print heads each being for the same color are present.

Further, print heads for respective basic colors of RGB may also be present.

In addition, a print head to record on a recording material by using a common print head through switching of light with plural wavelengths such as plural basic colors (for example, PLZT shutter array print head and others) is regarded as one wherein plural print heads are present.

In this case, images may also be one wherein a pixel interval whose length is at least one recording element or more is formed in the direction of the recording element, and pixels are arranged separately with intervals, but solid images having no intervals are preferable. Further, images may be any one provided that the image is solid, and the image having the same density in the direction of recording elements as far as possible is preferable. In addition, the image to be used mainly for correction of density unevenness of a print head is preferable.

When recording is conducted after a photosensitive material is cut, it is preferable that a length (LV) in the direction perpendicular to the direction of arrangement of recording elements of a print head is not so long for a length (LH) in the direction of arrangement of recording elements of a print head with respect to a size of a photosensitive material on which an image is recorded, and from viewpoints of transportability of photosensitive materials, reduction of loss paper and an influence on development processing, a ratio of LV/LH that is within 2 is preferable, a ratio within 1.2 is more preferable, and 0.9 is further more preferable.

A correction amount is present in each recording element, and it is one to adjust the light amount correction coefficient of each recording element so that each recording element can record on a photosensitive material with a uniform exposure amount. It is preferable that the correction amount is adjusted sufficiently, and due to this, uniform solid images can be obtained.

The light amount correction coefficient in the invention is a coefficient for controlling exposure amount by each recording element, and control of the exposure amount by controlling exposure time, for example, is preferable. In this case, each recording element may have its own individual light amount correction coefficient.

It is further preferable to correct the light amount correction coefficient stated above by using the correction amount corresponding to each recording element. Sufficient adjustment of the light amount correction coefficient of a print head by an accurate correction amount is preferable, and due to this, uniform solid images can be obtained.

(2) In the invention of the feature (1), it is preferable that the read information D (i) of the images for correction is density information.

(13) In the invention of the feature (12), it is preferable that the read information D (i) of the images for correction is density information.

Owing to the aforementioned features provided, the results of conducting feed back of results of correction in consideration of an influence of neighboring recording elements become accurate when density is used, because density is relatively high in its linearity. It is therefore possible to exhibit further an effect of the invention. Density information in this case means optical density obtained through reading by an optional image reading apparatus, and it may also be reflectance, transmission factor, light absorption factor, functional value in one-to-one correspondence to the foregoing, such as logarithmic value, though it may be optical density itself.

Density obtained by conducting measurement by reading images by the use of an image reading apparatus such as a flat-bed scanner may also be a signal value obtained through measurement by an image reading apparatus, and it may be a functional value in one-to-one correspondence to the signal value, for example, a logarithmic value. Further, as density in this case, optical density whose linearity is relatively high is preferable, and a logarithmic value of a signal value measured by an image reading apparatus, or optical density is given as a preferable example.

(3) In the invention described in the feature (1) or (2), it is preferable that the images for correction are recorded so that an influence exerted on a pixel recorded by $i^{th}$ recording element by a pixel recorded by another recording element arranged to be apart from the aforesaid recording element may be constant for all recording elements wherein i is arbitrary.

(14) In the invention described in the feature (12) or (13), it is preferable that the images for correction are recorded so that an influence exerted on a pixel recorded by $i^{th}$ recording element by a pixel recorded by another recording element arranged to be apart from the aforesaid recording element may be constant for all recording elements wherein i is arbitrary.

Owing to the aforementioned features, calculation for correction turns out to be simple substantially, which shortens greatly correction time without changing correction accuracy.

In this case, "a degree of an influence exerted by an interval of separated pixels is constant" means that an overlapping degree is given to read information D (i) of $i^{th}$ recording element by certain parameter $\alpha$ for a pixel that is apart by a distance equivalent to one recording element, and an influence of the pixel that is apart by a distance equivalent to two recording elements is given by certain parameter $\beta$, both for read information E (i) of $i^{th}$ recording element to be used for correction calculation, as shown in the following numerical expression I, for example.

Parameters $\alpha$ and $\beta$ are sometimes called an adjacent contribution factor in the following.

Numerical expression I;

$$E (i) = D (i) + (2\alpha D (i) - \alpha D (i + 1) - \alpha D (i - 1)) +$$

$$(2\beta D (i) - \beta D (i + 2) - \beta D (i - 2))$$

Though up to influences of pixels each being apart from a target pixel by a distance equivalent to two pixels are taken into consideration in Numerical expression I, influences of pixels each being further apart from the target pixel by a distance equivalent to three or four pixels may also be taken into consideration in the same way.

It is further preferable that established parameters $\alpha$ and $\beta$ each corresponding to each print head are available. (4) In the invention described in either one of the features (1) - (3), it is preferable that read information D (i) for the $i^{th}$ recording element is obtained from a pixel recorded by the $i^{th}$ recording element and from a pixel recorded by another adjoining recording element.

(15) In the invention described in either one of the features (12) - (14), it is preferable that read information D (i) for the $i^{th}$ recording element is obtained from a pixel recorded by the $i^{th}$ recording element and from a pixel recorded by another adjoining recording element.

Owing to the aforementioned features provided, calculation for correction becomes to be simple substantially, and therefore, it is possible to shorten further greatly the correction time without changing correction accuracy.

In the explanation employing numbers assigned to respective recording elements shown in Figs.

7 (a) - 7 (c), an adjoining pixel in the invention means a recording element having a consecutive number. Even in the case of zigzag arrangement in two rows as shown in Fig. 7 (b), such adjoining pixel means a recording element having a consecutive number.

Read information E (i) of ith recording element used for calculation of correction may be any information, but, there is a piece of information calculated by the use of the following numerical expression, as a preferable example.

Numerical expression II;

$$E (i) = D (i) + 2\alpha D (i) - \alpha D (i + 1) - \alpha D (i - 1))$$

Further, it is preferable that the invention described in either one of the features (1) - (4) has a means to change a degree of influence of the pixel recorded by another recording element arranged to be close to the ith recording element, as in the invention described in the feature (5), and it is preferable that the invention described in either one of the features (12) - (15) has a means to change a degree of influence of the pixel recorded by another recording element arranged to be close to the ith recording element, as in the invention described in the feature (16).

Owing to the aforementioned features, it is possible to cope with variation factors including an image reading apparatus such as a flat-bed scanner, a type of a print head wherein recording elements are arranged in an array form and a color for conducting correction of RGB basic colors, which makes it possible to exhibit an effect of the invention thoroughly.

As a preferable example of the means to change a rate of contribution in this case, there is given, for example, means to change parameters $\alpha$ and $\beta$ in the numeral expressions I and II.

Further, when changing various conditions, it is preferable to have a means wherein the contribution is decided automatically when the various conditions are selected.

(6) In the invention described in either one of the features (1) - (5), it is preferable that the image reading apparatus is provided with a pressure member for setting the images for correction onto the image reading apparatus.

(17) In the invention described in either one of the features (12) - (16), it is preferable that the images for correction are held in the image reading apparatus by the use of the pressure member.

Owing to the aforementioned features, an edge decision can be conducted accurately, and precision of correction is improved accordingly. Further, density unevenness of low-frequency components can be reduced substantially.

In this case, the pressure member is a member to hold images for correction. It is preferable that this pressure member is, for example, black in color and has density that is substantially uniform. AS a material of the pressure member, a soft material that can be crooked freely such as, for example, rubber or a sponge is preferable. Due to the aforementioned features, an edge decision can be conducted accurately, and precision of correction is improved accordingly.

(7) In the invention described in either one of the features (1) - (6), it is preferable to record the images for correction on the photosensitive material by recording lines in a line number within a range of 50 - 1000.

(18) In the invention described in either one of the features (12) - (17), it is preferable to record the images for correction on the photosensitive material by recording lines in a line number within a range of 50 - 1000.

Owing to the aforementioned features, density unevenness of high-frequency components can be reduced.

(8) In the invention described in feature (7), it is preferable to obtain the read information from lines occupying 10% or more of lines constituting the images for correction.

(19) In the invention described in feature (18), it is preferable to obtain the read information from lines occupying 10% or more of lines constituting the images for correction.

Owing to the aforementioned features, an image for correction turns out to be small, and thereby, an image forming apparatus can be made small.

(9) In the invention described in either one of features (1) - (8), it is preferable to record the images for correction on a photosensitive material composed of silver halide.

(20) In the invention described in either one of features (12) - (19), it is preferable to record the images for correction on a photosensitive material composed of silver halide.

Owing to the aforementioned features, more effect of the invention can be exhibited.

(10) In the invention described in either one of features (1) - (9), it is preferable to record the images for correction on a photosensitive material having a reflection support.

(21) In the invention described in either one of features (12) - (20), it is preferable to record the images for correction

Owing to the aforementioned features, more effect of the invention can be exhibited.

(11) In the invention described in either one of features (1) - (10), it is preferable that a value shown by the read information obtained from the images for correction is set on a straight line portion (a large gradient range) of the characteristic curve of the photosensitive material.

(22) In the invention described in either one of features (12) - (21), it is preferable that a value shown by the read information obtained from the images for correction is set on a straight line portion (a large gradient range) of the characteristic curve of the photosensitive material.

Owing to the aforementioned features, there is used a portion where the gradation characteristic changes with higher gradient compared with portions of high density and low density, and therefore, density variation of an image for variation of light amount can be expressed to be relatively large. For that reason, precision of correction is improved.

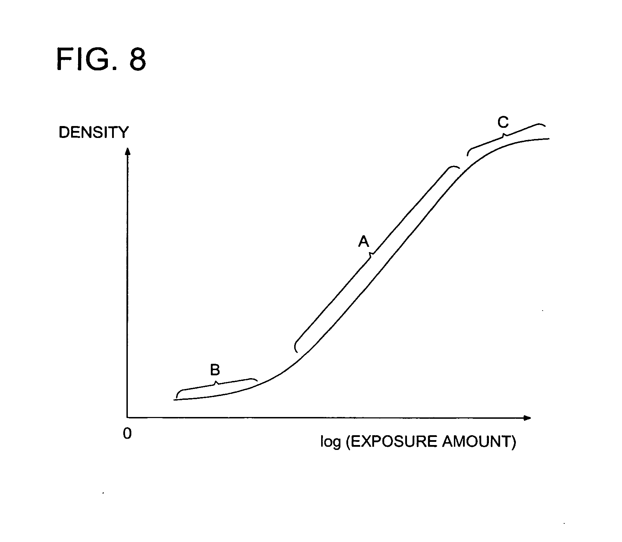

In this case, "a portion where the gradation characteristic changes with higher gradient" corresponds to a straight line portion shown with symbol A in Fig. 8.

With respect to the image reading apparatus in the invention, the one wherein a line-shaped CCD is provided and images are read when the line-shaped CCD scans such as a flat-bed scanner or a drum scanner is preferable.

When measuring density of images for correction by using the image reading apparatus, it is preferable to read images for correction at the resolution (for example, 1200 dpi) that is higher than the resolution (for example, 300 dpi) recorded on a photosensitive material by using a print head in which recording elements are arranged in an array form.

## EMBODIMENTS OF THE INVENTION

Image forming apparatus 100 in the present embodiment will be explained as follows.

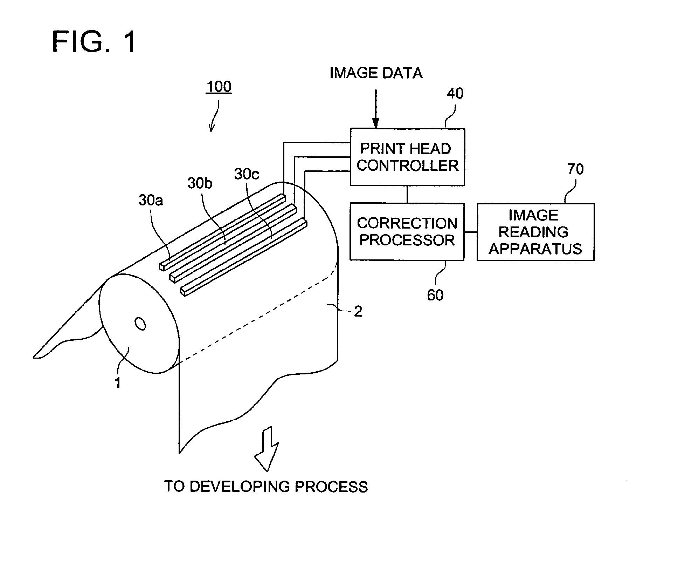

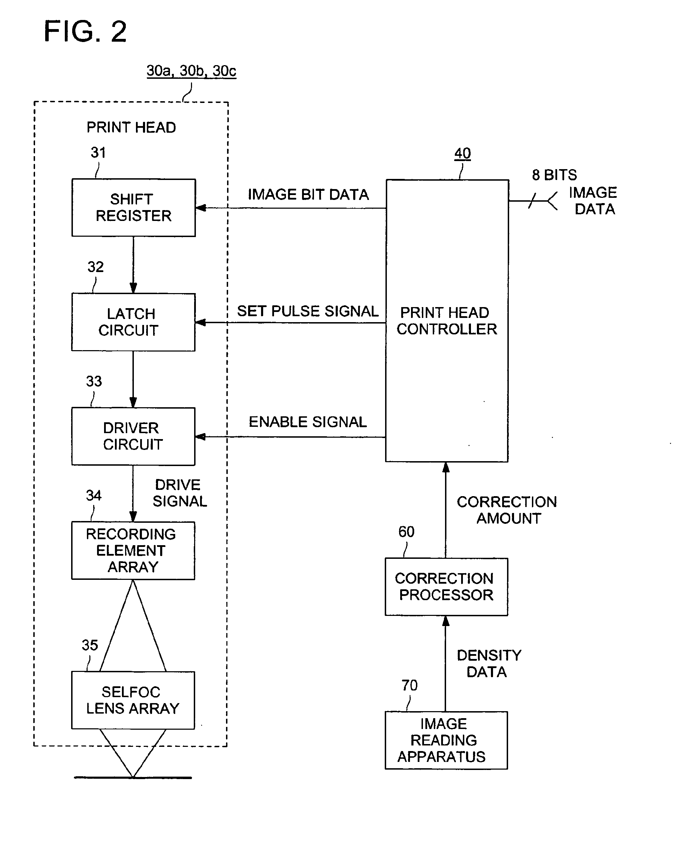

Fig. 1 and Fig. 2 show a schematic structure of image forming apparatus 100.

As shown in Fig. 1, the image forming apparatus 100 is composed of supporting drum 1, red print head 30a, green print head 30b, blue print head 30c, print head control section 40, correction processing section 60 and image reading apparatus 70.

After a photo paper for color photograph (hereinafter referred to as photo paper 2) representing a silver halide photographic photosensitive material fed out of a roll of the supporting drum 1 is conveyed in the direction shown with an arrow by the supporting drum 1 that is rotated by an unillustrated driving source, red print head 30a, green print head 30b and blue print head 30c give exposure on prescribed positions on photo paper 2 in succession based on exposure control corresponding to image information for output by print head control section 40, to form latent images for color images on the photo paper 2. After completion of this exposure process, the photo paper 2 is conveyed by the supporting drum 1 to developing process.

Each of red print head 30a, green print head 30b and blue print head 30c has a light source serving as recording elements arranged in an array form in one row or two rows.

On the red print head 30a, there is used an LED light source, and on each of the green print head 30b and the blue print head 30c, there is used a vacuum fluorescent print head that can be subjected to color separation easily by a color filter under the conditions of relatively high luminance and high speed response. Incidentally, the photo paper 2 may also be sheet paper without being limited to roll paper, and a conveyance method for photo paper 2 is not restricted in particular.

Further, the red print head 30a is composed of shift register 31, latch circuit 32, driver circuit 33, recording element array 34, selfoc lens array 35, as shown in Fig. 2. Incidentally, the foregoing also applies to the green print head 30b and the blue print head 30c in the same way, in addition to the red print head 30a.

In the red print head 30a (also in the green print head 30b and the blue print head 30c), when data of MSB (most significant bit) are transmitted to shift register 31 from print head control section 40 as image bit data for one line, a set pulse signal is inputted in latch circuit 32 from print head control section 40, and data of the aforementioned MSB for one line are latched collectively in latch circuit 32 in synchronization with the set pulse signal. The image bit data in this case mean data of a specific bit among image information for output.

Then, after an enabling signal corresponding to gradation is inputted into driver circuit 33 from print head control section 40, the red print head 30a controls to drive the recording element, corresponding to the enabling signal, to make it to emit light in accordance with data of MSB latched in the latch circuit 32. Namely, driver circuit 33 transmits driving signals to a recording element in recording element array 34 with a selected latched data of "1" to emit light for a period of time of enabling signals. Emitted light forms an image on photo paper 2 through selfoc lens array 35, thus, a latent image is formed. When the processing of this kind is conducted for all bits covering from MSB to LSB (least significant bit) in succession, recording for one line is completed. With respect to an order of bits, the processing may be conducted by starting from LSB, or it may be conducted in other orders without being limited.

When 8-bit image information is inputted for each of red, green and blue colors, the print head control section 40 converts the inputted image information into 12-bit image information for output based on output value conversion LUT (Look Up Table) including exposure amount information. In this case, the image information for output represents serial digital data equivalent to one line for each bit data, and it generates a set pulse signal for transmitting image bit data to latch circuit 32 and generates an enabling signal for controlling emission time, and these image bit data, a set pulse signal and an enabling signal are outputted to each of the red print head 30a, the green print head 30b and the blue print head 30c.

Based on light amount correction coefficient for correcting light emission characteristics for the red print head 30a, the green print head 30b and the blue print head 30c inputted from correction processing section 60, the print head control section 40 controls the enabling signal to adjust light emission characteristics of the red print head 30a, the green print head 30b and the blue print head 30c.

Since unillustrated color separation filters for green and blue are arranged on the lower portion of selfoc lens array 35 in VFPH having light emission characteristics respectively for green components and blue components, print head control section 40 conducts recording control while shifting exposure timing for the red print head 30a, the green print head 30b and the blue print head 30c, so that image information transmitted for each color is recorded on a prescribed position on the photo paper 2. Due to this, color images can be recorded on photo paper 2 appropriately.

The correction processing section 60 calculates light amount correction coefficient for correcting light emission characteristics of the red print head 30a, the green print head 30b and the blue print head 30c from density information, and outputs it to the print head control section 40.

Next, image for correction 2a used in the present embodiment will be explained as follows.

The image for correction 2a is one recorded on photo paper 2 by image forming apparatus 100 and is used when an amount of correction for the light amount correction coefficient or for the exposure amount is calculated.

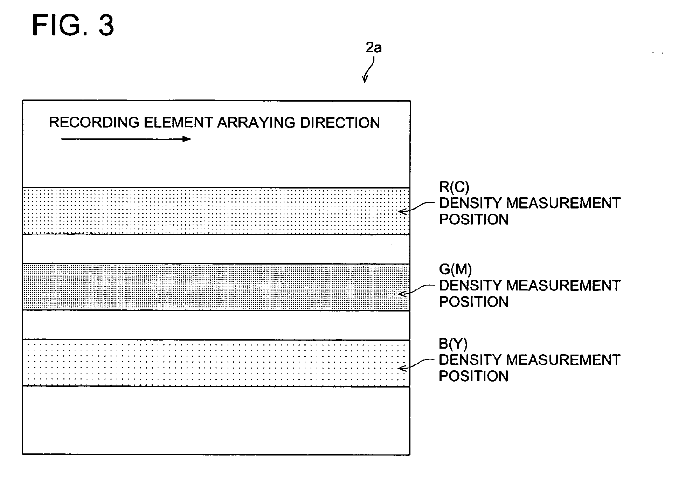

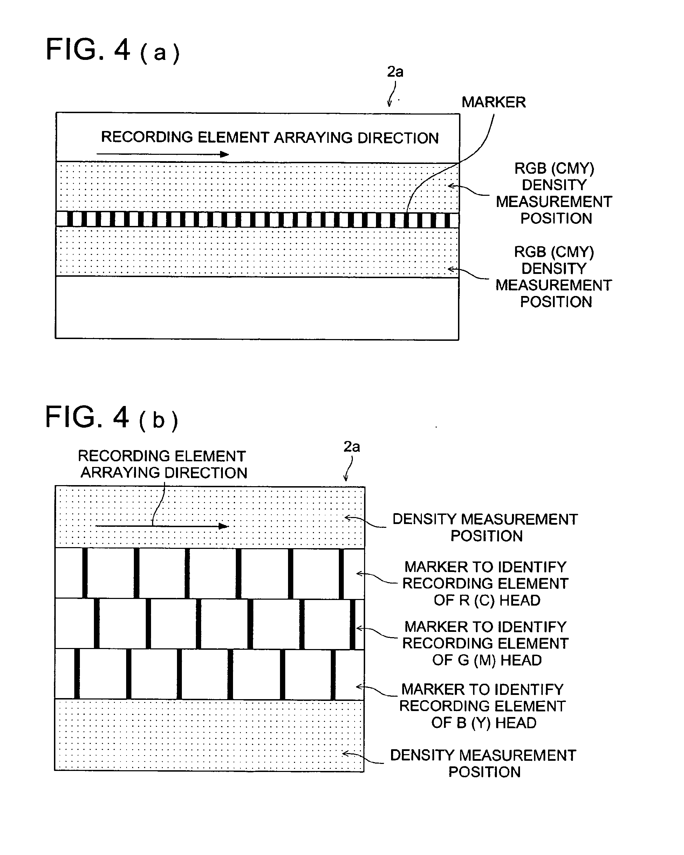

The image for correction 2a may either be one wherein it is recorded by each of the red print head 30a, the green print head 30b and the blue print head 30c individually as shown in Fig. 3, and it is colored by dye for each of basic colors of YMC, or be one wherein the images for correction are recorded by the red print head 30a, the green print head 30b and the blue print head 30c simultaneously as shown in Fig. 4 (a), and the images for correction are colored by dyes of basic colors at the same position.

As shown in Fig. 4 (a), it is preferable that the image for correction 2a has a marker section that clarifies an order of arrangement of respective recording elements of the red print head 30a, the green print head 30b and the blue print head 30c, and specifies each recording element individually, for specifying density corresponding to each of recording elements respectively for the red print head 30a, the green print head 30b and the blue print head 30c.

With respect to the marker interval on the marker section, a small interval, such as, for example, the interval of 10 pixels or less is preferable from the viewpoint of the aforementioned purpose of use, the interval of 5 pixels or less is more preferable and, the interval of 1 pixel is most preferable. In this case, the interval of 1 pixel means a repetition of ON, OFF, ON, OFF · · for one pixel.

It is preferable that image for correction 2a has a marker section for each of the red print head 30a, the green print head 30b and the blue print head 30c, because it is feared that errors to some extent may be included in mounting accuracy for each of the red print head 30a, the green print head 30b and the blue print head 30c. When the same position is colored by dye of each basic color as shown in Fig. 4 (b), it is preferable that the image for correction 2a has a marker section for each basic color, namely, for each of the red print head 30a, the green print head 30b and the blue print head 30c.

Though only one marker section is present in Fig. 4 (a), a plurality of marker sections may also be present. In particular, when the print head is constituted by recording on plural positions, it is preferable to make the marker section to be present in the vicinity of the recorded position, and to make the markers to be present at plural positions, and it is preferable to make the marker to be present between the recorded positions.

When a plurality of marker sections are present, it is preferable for the image for correction 2a that the plural marker sections mentioned above are recorded (printed) by the same recording element.

When the image for correction 2a is recorded on cut (sheet-shaped) photo paper 2 of a cut (sheet-shaped) type not of a roll-shaped type, it is preferable that the image for correction 2a is recorded at the central portion of the photo paper 2 as far as possible, and it is further possible that a non-recorded area is formed in the forefront of the photo paper 2.

When each of basic colors YMC is recorded individually on the image for correction 2a by each of the red print head 30a, the green print head 30b and the blue print head 30c as the image for correction 2a, it is preferable, from the viewpoint of developability, to convey to a development processing apparatus so that a portion composed of Y dye may be processed finally.

It is preferable for the image for correction 2a that plural image data are recorded separately at plural respective different areas, and it is preferable, from the viewpoint of simplification of calculation processing, to record in an order from image data recorded at low density to image data recorded at high density in succession, and it is further preferable, from the viewpoint of developability, to convey to the development processing apparatus so that a portion recorded at lower density may be processed earlier.

It is preferable that a range for density measurement for the image for correction 2a is as broad as possible, and the number of positions for density measurement for the image for correction 2a is as many as possible. Further, it is preferable that the number of lines to be recorded is in a range of 50 - 1000, and a range of 50 - 200 is more preferable and a range of 60 - 100 is further preferable. Further, it is preferable that 10% - 90% of the number of lines recorded are subjected to density measurement for obtaining a correction amount for the light amount correction coefficient and for the exposure amount, and a range of 20% - 80% is more preferable.

With respect to the density range for images for correction, density from 0.3 to 1.5 is preferable, that from 0.4 to 1.0 is more preferable and that from 0.5 to 0.7 is most preferable for R (Red), density from 0.2 to 1.5 is preferable, that from 0.3 to 0.8 is more preferable and that from 0.4 to 0.6 is most preferable for G (Green), and density from 0.15 to 1.5 is preferable, that from 0.3 to 1.0 is more preferable and that from 0.4 to 0.6 is most preferable for B (Blue).

Operations will be explained next.

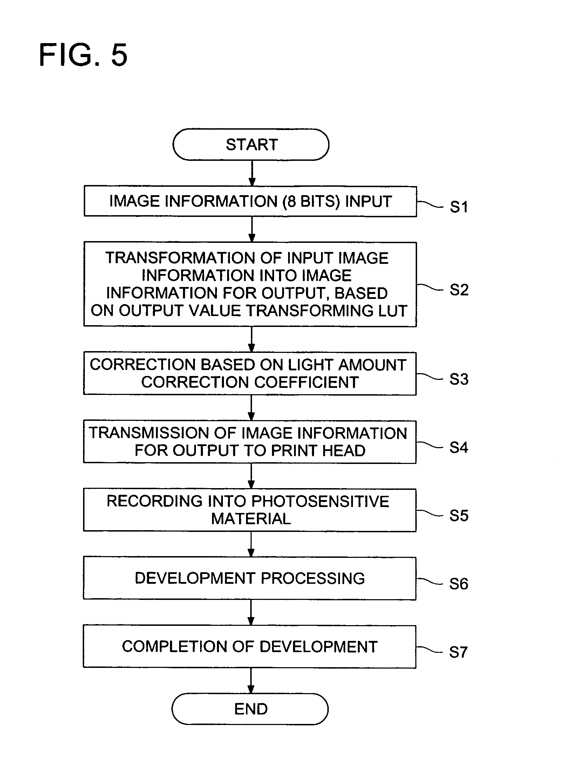

Image forming processing by image forming apparatus 100 will be explained as follows, referring to the flow chart shown in Fig. 5.

When 8-bit image information is inputted for each of a red color, a green color and a blue color (step S1), print head control section 40 converts the inputted image information to image information for output based on output value conversion LUT (step S2).

Further, based on the light amount correction coefficient that is inputted from correction processing section 60 and is for correcting light emission characteristics for each of the red print head 30a, the green print head 30b and the blue print head 30c, the print head control section 40 controls an enabling signal and adjusts light emission characteristics for each of the red print head 30a, the green print head 30b and the blue print head 30c (step S3).

After that, the print head control section 40 transmits image information for output for each of the aforesaid colors to each of the red print head 30a, the green print head 30b and the blue print head 30c (step S4), and records on photo paper 2 (step S5).

Then, the photo paper 2 on which the image for output is recorded is subjected to development processing (step S6), and this image forming processing is completed (step S7) when development is finished (step S7).

Next, Experiment Examples 1 - 9 made by using image forming apparatus 100 having the aforesaid structure will be explained.

(Experiment Example 1)

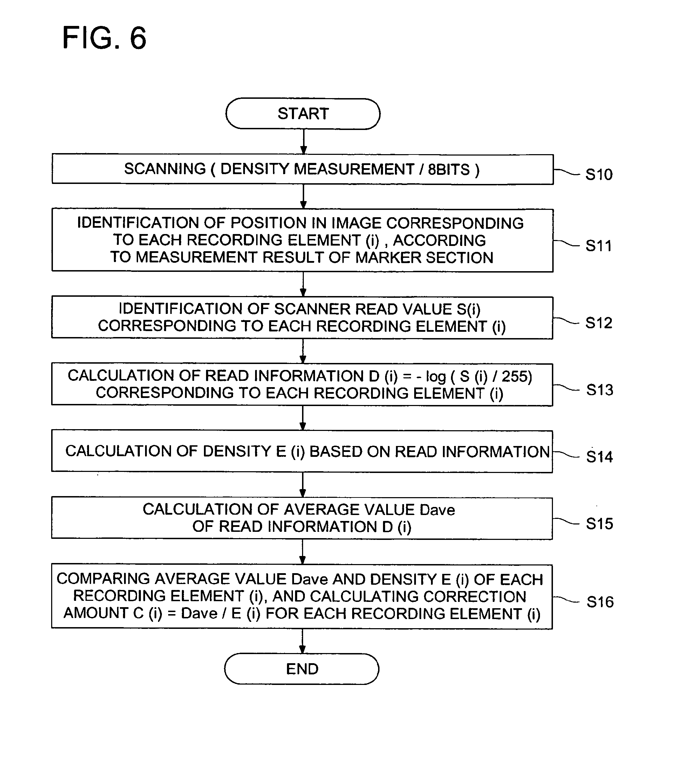

First, Experiment Example 1 will be explained. In the Experiment Example 1, when obtaining light amount correction coefficient C (i) of $i^{th}$ recording element from the state of inferior density unevenness (density unevenness for each of B and G is satisfactory) by using image for correction 2a shown in Fig. 3, for red print head 30a based on calculation processing shown in the flow chart in Fig. 6, density unevenness after correction of the light amount correction coefficient (visual evaluation on a portrait including gradation of gray) and necessary frequency of corrections were compared between the case where the read information other than read information D (i) of the $i^{th}$ recording element is used and the case where the read information is not used. In this case, read information used in processing in step S 14 illustrated in the flow chart in Fig. 6 is a scanner signal value.

Results of the Experiment Examples 1 show that density unevenness of high-frequency components was decreased when C (i) was calculated by using read information other than read information D (i) of the $i^{th}$ recording element. The number of corrections was four when read information other than read information D (i) of the $i^{th}$ recording element was used, and it was eight when the read information other than read information D (i) of the $i^{th}$ recording element was not used.

Now, the calculation processing shown in the flow chart in Fig. 6 will be explained. The calculation processing is carried out by correction processing section 60 for each of the red print head 30a, the green print head 30b and the blue print head 30c.

After receiving image information of image for correction 2a scanned by image reading apparatus 70 (step S 10), the correction processing section 60 specifies, from the image information thus received, a position on the image for correction 2a of each recording element (hereinafter, $i^{th}$ recording element is called recording element (i)), based on image information relating to a marker section of the image for correction 2a (step S11).

After step S 11, the correction processing section 60 specifies scanner read value S (i) corresponding to recording element (i) (step S12).

After that, the correction processing section 60 calculates read information D (i) corresponding to recording element (i) by using Numerical expression; D (i) = -log (S (i) / 255).

Then, the correction processing section 60 calculates density E (i) based on the read information D (i) by using Numerical expression I (step S14).

Further, the correction processing section 60 calculates mean value Dave corresponding to read information D (i) (step S15), and calculates light amount correction coefficient C (i) corresponding to recording element (i) through Numerical expression; C (i) = Dave / E (i) by using the mean Dave and density E (i) (step S16).

By making an influence (parameter $\alpha$, $\beta_0$) exerted on a pixel recorded by $i^{th}$ recording element, for example, by a pixel recorded by another recording element arranged to be apart from the aforesaid recording element to be constant for all recording elements each having arbitrary i, it is possible to correct density unevenness by simple calculation while keeping correction accuracy for density unevenness.

(Experiment Example 2)

Next, Experiment Example 2 will be explained. The Experiment Example 2 was conducted by the use of images for correction 2a shown in Fig. 4 for five occasions including (1) an occasion where the read information is scanner signal value, (2) an occasion where the read information is a logarithmic value of the scanner signal value, (3) an occasion where the read information is a squared value of the scanner signal value, (4) an occasion where the read information is correction value C (i) (C (i) was obtained without considering contribution of neighboring pixels) and (5) an occasion where the read information is a logarithmic value of the scanner signal value, but contribution of neighboring pixels is not considered.

Results of the Experiment Examples 2 show that density unevenness was the best when the read information was a logarithmic value of the scanner signal value (2), density unevenness was the excellent when the read information was the scanner signal value (1), density unevenness was good when the read information was the squared value of the scanner signal value (3), density unevenness was bad when the read information was the correction value C (i) and density unevenness was worst when the read information was in the occasion of (5).

With respect to the number of corrections, it was four when the read information was the scanner signal value (1), it was two when the read information was the logarithmic value of the scanner signal value (2), it was six when the read information was the squared value of the scanner signal value (3), it was seven when the read information was the correction value C (i) (4) and it was eight when the read information was in the case of (5).

Incidentally, it is preferable that read information in the present experiment example 2 is optical density or a logarithmic value such as a scanner signal value.

(Experiment Example 3)

Next, Experiment Example 3 will be explained. The Experiment Example 3 was conducted in the same way as in the Experiment Example 2 stated above wherein the numerical expression used in the processing in step S 14 in the flow chart shown in Fig. 6 is numerical expression II.

Results of the Experiment Examples 3 show that there was no difference in necessary number of corrections and in density unevenness, but a period of time needed for calculation processing was further reduced by about 70% for the results of experiments in Experiment Example 3.

(Experiment Example 4)

Next, Experiment Example 4 will be explained. The Experiment Example 4 was conducted in the same way as in the Experiment Example 2 stated above. Incidentally, in this case, the numerical expression used in the processing of step S 14 of the flow chart shown in Fig. 6 may also be numerical expression II.

In the Experiment Example 4, density unevenness was corrected from the state of inferior density unevenness (density unevenness was satisfactory for R (red color) and B (blue color), and in particular, the Experiment Example 4 was conducted when adjacent contributions (parameters $\alpha$ and $\beta$ in the numerical expression I) for red print head 30a were used (1) and when adjacent contributions for green print head 30b were used (2).

Results of the Experiment Examples 4 show that the density unevenness was the best when the adjacent contributions for green print head 30b (2) were used and the density unevenness was the second best when the adjacent contributions for red print head 30a (1) were used.

With respect to the number of corrections, it was four when the adjacent contributions for red print head 30a were used (1), and it was two when the adjacent contributions for green print head 30b were used (2).

Incidentally, it is preferable, from the viewpoint of operations, that red print head 30a and green print head 30b are made to be selected by software through a program.

(Experiment Example 5)

Next, Experiment Example 5 will be explained. The Experiment Example 5 was conducted after photo paper 2 having thereon image for correction 2a recorded was held by a black pressure member such as rubber on an unillustrated reading portion of image forming apparatus 70. Owing to this, an edge portion was corrected properly, and a lift and skewing of paper were reduced. Thus, unevenness of low-frequency components was reduced.

(Experiment Example 6)

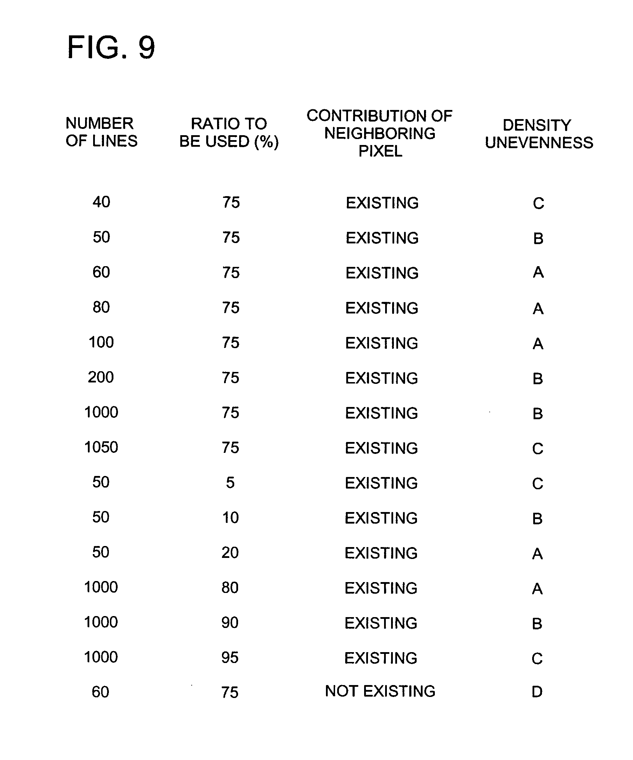

Next, Experiment Example 6 will be explained. In the Experiment Example 6, density unevenness was evaluated based on the evaluation standard shown below. The results of the evaluation are shown in Fig. 9. As shown in Fig. 9, it was possible to reduce density unevenness by using the image for correction having a width composed of 50 - 1000 lines of pixels. In particular, it is possible to make image for correction 2a to be smaller by utilizing 10% or more of pixel lines composing the image for correction, which is preferable from the viewpoint of shortening of the time required for calculation and of reduction of paper waste.

An evaluation standard for density unevenness evaluation shown in Fig. 9 will be explained below. "A" shows that density unevenness does not exist at all and image quality is extremely excellent, "B" shows that image quality is remarkably excellent though slight density unevenness is observed partially, "C" shows that image quality is excellent though slight density unevenness is observed, and "D" shows that density unevenness is observed and image quality is not desirable.

(Experiment Example 7)

Next, Experiment Example 7 will be explained. In the Experiment Example 7, a silver halide photosensitive material was used as a photosensitive material of photo paper 2 on which image for correction 2a is recorded. Owing to this, more effect of the invention was exhibited.

(Experiment Example 8)

Next, Experiment Example 8 will be explained. In the Experiment Example 8, a reflection support was used as a photosensitive material of photo paper 2 on which image for correction 2a is recorded. Owing to this, more effect of the invention was exhibited.

(Experiment Example 9)

Next, Experiment Example 9 will be explained. The Experiment Example 9 was conducted in the same way as in the Experiment Example 3, for three occasions wherein density of image for correction 2a used for processing in step S 10 in the flow chart in Fig. 6 is low (1) (representing a nonlinear portion shown with symbol B in the diagram in Fig. 8), medium (2) (representing a linear portion shown with symbol A in the diagram in Fig. 8), and high (3) (representing a nonlinear portion shown with symbol C in the diagram in Fig. 8).

Results of the Experiment Examples 9 show that density unevenness was the best in the case of (2) and density unevenness was the second best in the case of (1) and in the case of (3). With respect to the number of corrections, it was four in the case of (1) and in the case of (3) and it was two in the case of (2).

As explained above, in image forming apparatus 100 in the present embodiment, density unevenness correction and setting up are carried out by considering overlapping (adjacent contribution) of pixels of recording elements each being recorded on photo paper 2.

It is therefore possible to measure accurately density corresponding to each recording element, and to conduct accurate feed back. Due to this, reduction of density unevenness can reach the sufficient level.

Further, even in the case where overlapping and a degree of influence of adjoining pixels are changed, it is possible to measure accurately and feed back accurately the density corresponding to each recording element, by making the adjacent contribution to be changeable in accordance with a recording element.

Furthermore, when using a recording element that is greater than a pitch of pixels at the desired resolution, an influence of an adjoining pixel is extremely great because there is used a print head on which recording elements are arranged in an array form in two or three rows including a zigzag form. Even in this case, it is possible to measure accurately and feed back accurately the density corresponding to each recording element.

Moreover, when photo paper 2 is a color photo paper with a silver halide photosensitive material, a beam spot is blurred by halation wherein light transmitted through a photosensitive layer is reflected on a reflection support to expose the photosensitive layer to light, because the reflection support is present in the photo paper. Even in this case, it is possible to measure accurately and feed back accurately the density corresponding to each recording element.

Further, for the image forming optical system of a print head equipped with recording elements arranged in an array form, a selfoc lens is used in many cases, and image forming light formed by the selfoc lens is made to form on a photosensitive material. Even in cases where a selfoc lens is used, an adverse effect on focus shifting of a beam spot and on bleeding of image can be avoided, even for delicate positional deviation caused by curl of photosensitive material of photo paper 2, or for variation in the course of transport of photosensitive materials.

Though there are so many causes for overlapping of pixels of each recording element as stated above, it is possible to obtain results of accurate corrections for density unevenness, independently of the causes.

It is further possible to reduce not only the level of density unevenness but also the number of corrections required for solution of density unevenness.

Namely, the invention has an effect for reduction of density unevenness, especially for reduction of density unevenness of high-frequency components, and it is possible to realize an image forming method and an image forming apparatus wherein a converging speed for density unevenness is high. Following upon this, it is possible to manufacture digital minilab equipment which can be put to practical use.

(Second Embodiment)

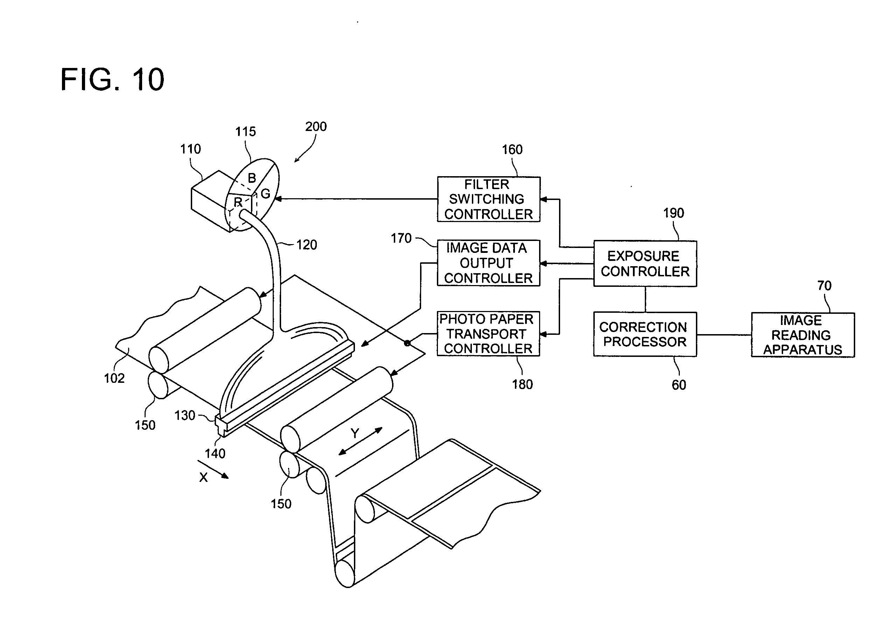

First, a schematic structure of image forming apparatus 200 used in the second embodiment will be explained as follows, referring to Fig. 10.

Image forming apparatus 200 is composed of white light source 110, color filter 115, optical fiber array 120, PLZT shutter array 130, selfoc lens array 140, conveyance means 150, filter switching controller 160, image data output controller 170, transport controller 180, exposure controller 190, correction processing section 60 and image reading apparatus 70.

As is shown in Fig. 10, light emitted from white light source 110 and transmitted through rotary color filter 115 passes through optical fiber array 120 to be guided to PLZT shutter array 130, and gives exposure on the prescribed position on photo paper 102. The exposure is given on photo paper 102 that is conveyed in the direction of arrow X by conveyance means 150 which is interlocked with a driving source (not shown) to rotate.

Color filter 115 is in a form of a disc, and the disc is divided into three equal sectors each having an angle of circumference of 120° and having each color of red (R), green (G) and blue (B), and a center shaft of the disc is connected with a driving source (not shown). When the color filter 115 rotates, each of filters with respective colors of RGB is positioned selectively on an optical path.

Optical fiber array 120 guides light of each color in RGB that has passed through color filter 115 to PLZT shutter array 130.

On the PLZT shutter array 130, a plurality of PLZT elements are arranged in an array form in one row in the direction (the direction of arrow Y in Fig. 10) perpendicular to the conveyance direction (the direction of arrow X in Fig. 10) for photo paper 102. Each PLZT element is arranged at an interval corresponding to a pixel. The PLZT element is an optical shutter, and its transmission factor for light varies depending on impressed voltage. Exposure is given while the PLZT element is transmitting light. Exposure time is controlled corresponding to image data, and gradation is expressed. For example, when expressing lower density, shorter exposure time is required.

Light transmitted through the PLZT shutter array 130 forms an image on photo paper 102 through selfoc lens array 140.

Filter switching controller 160 rotates color filter 115 in accordance with image data in respective exposure colors of RGB, and switches a color of light for exposure in succession. Image data output controller 170 controls exposure time by changing voltage to be impressed on PLZT shutter array 130 in accordance with image data in respective exposure colors of RGB. Photo paper transport controller 180 controls transport means 150.

Exposure controller 190 updates a light amount correction coefficient based on an amount of correction calculated by correction processing section 60, and it controls simultaneously, based on the updated light amount correction coefficient, the filter switching controller 160, image data output controller 170 and transport controller 180. Thus, exposure is given to prescribed positions on 102 for each color, and a latent image for a color image is formed on the 102. After completion of the exposure process, the 102 is transported to a developing process representing a following process.

In image forming apparatus 200, a calculation method for an amount of correction in correction processing section 60 and a method of acquiring read information in image reading apparatus 70 are the same as those in the image forming apparatus 100, though the structure of the portion to give exposure is different. Therefore, explanation thereof will be omitted here.

After conducting the same experiment as that in the First Embodiment by using the present image forming apparatus, it was confirmed that the results obtained from the experiment were the same as those in the First Embodiment.

The description in the present embodiment stated above shows specific examples of the image forming method and the image forming apparatus of the invention, to which, however, the invention is not limited. Detailed structures and operations of image forming apparatuses 100 and 200 in the present embodiment can be modified by a skilled person according to circumstances without departing from the spirit and scope of the invention.

(Effect of the invention)

In the invention, it is possible to measure accurately density corresponding to each recording element, and to conduct accurate feed back, by considering overlapping (adjacent contribution) of pixels of each recording element recorded on photosensitive material of a photo paper. Due to this, reduction of density unevenness can reach the sufficient level.

Further, even in the case where overlapping and a degree of influence of adjoining pixels are changed, it is possible to measure accurately and feed back accurately the density corresponding to each recording element, by making the adjacent contribution to be changeable in accordance with a recording element.

Furthermore, when using a recording element that is greater than a pitch of pixels at the desired resolution, an influence of an adjoining pixel is extremely great because there is used a print head on which recording elements are arranged in an array form in two or three rows including a zigzag form. Even in this case, it is possible to measure accurately and feed back accurately the density corresponding to each recording element.

Moreover, when a photosensitive material of photo paper 2 is a silver halide color photo paper, a beam spot is blurred by halation wherein light transmitted through a photosensitive layer is reflected on a reflection support to expose the photosensitive layer to light, because the reflection support is present in the photo paper. Even in this case, it is possible to measure accurately and feed back accurately the density corresponding to each recording element.

Further, for the image forming optical system of a print head equipped with recording elements arranged in an array form, a selfoc lens is used in many cases, and image forming light formed by the selfoc lens is made to form on a photosensitive material, therefore, an adverse effect on focus shifting of a beam spot and on bleeding of image can be avoided, even for delicate positional deviation caused by curl of photosensitive material of photo paper, or for variation in the course of transport of photosensitive materials.

Though there are so many causes for overlapping of pixels of each recording element as stated above, it is possible to obtain results of accurate corrections for density unevenness, independently of the causes.

It is further possible to reduce not only the level of density unevenness but also the number of corrections required for solution of density unevenness.

Namely, the invention has an effect for reduction of density unevenness, especially for reduction of density unevenness of high-frequency components, and it is possible to realize an image forming method and an image forming apparatus wherein a converging speed for density unevenness is high.

**Claims**

1. An image forming apparatus comprising:

a print head comprising a plurality of recording elements arranged in an array, each of the plurality of recording elements being operated based on respective each correction coefficient of light amount; and
an image reading apparatus for reading an image recorded on photosensitive material;

wherein, the image forming apparatus records an image for correction onto the photosensitive material by using the print head, acquires read information D (i) of the image for correction recorded (where, "i" is a natural number indicating an arraying order of each of the plurality of recording elements) through the image reading apparatus, acquires a correction amount C (i) for a recording characteristic of each of the plurality of recording elements based on the read information D (i) acquired, and records an image by using the correction amount C (i) acquired;
wherein, the image recording apparatus acquires the correction amount C (i) for the recording characteristic of i-th recording element by using the read information D (i) and read information D (k) corresponding to another one of the plurality of recording elements (where, "k" is a different natural number from "i").

2. The image forming apparatus of claim 1, wherein the read information D (i) of the image for correction is density information.

3. The image forming apparatus of claim 1 or 2, wherein the image for correction is recorded in such a way that a degree of influence to a first pixel recorded by the i-th recording element from a second pixel recorded by the other recording element is made constant for any of the plurality of recording elements with arbitrary "i".

4. The image forming apparatus of any one of claims 1 - 3, wherein the read information D (i) corresponding to i-th recording element is acquired from a pixel recorded by the i-th recording element and from other pixel recorded by an adjacent recording element to the i-th recording element.

5. The image forming apparatus of any one of claims 1 - 4, further comprising a means for changing a degree of influence to a pixel recorded by the i-th recording element from other pixel recorded by an recording element in the vicinity of the i-th recording element.

6. The image forming apparatus of any one of claims 1 - 5, further comprising a pressing member for setting the image for correction onto the image reading apparatus.

7. The image forming apparatus of any one of claims 1 - 6, wherein the print head records the image for correction composed of recording lines ranging from 50 to 1000 lines.

8. The image forming apparatus of claim 7, wherein the image forming apparatus acquires the read information from not less than 10 % of the recording lines composing the image for correction.

9. The image forming apparatus of any one of claims 1 - 8, wherein the image forming apparatus records the image for correction onto the photosensitive material comprising silver halide.

10. The image forming apparatus of any one of claims 1 - 9, wherein the image forming apparatus records the image for correction onto the photosensitive material provided with a reflection support.

11. The image forming apparatus of any one of claims 1 - 10, wherein a value indicated by the read information falls within a large gradient range in a characteristic curve of the photosensitive material.

12. An image forming method comprising:

recording an image for correction onto photosensitive material by using a print head comprising a plurality of recording elements arranged in an array, each of the plurality of recording elements being operated based on respective each correction coefficient of light amount; and
acquiring read information D (i) of the image for correction recorded (where, "i" is a natural number indicating an arraying order of each of the plurality of recording elements) through reading the image,

acquiring a correction amount C (i) for a recording characteristic of each of the plurality of recording elements based on the read information D (i) acquired, and

recording an image by using the correction amount C (i) acquired;

wherein, the correction amount C (i) for the recording characteristic of i-th recording element is acquired by using the read information D (i) and read information D (k) corresponding to another one of the plurality of recording elements (where, "k" is a different natural number from "i").

13. The image forming method of claim 12, wherein the read information D (i) of the image for correction is density information.

14. The image forming method of claim 12 or 13, wherein the image for correction is recorded in such a way that a degree of influence to a first pixel recorded by the i-th recording element from a second pixel recorded by the other recording element is made constant for any of the plurality of recording elements with arbitrary "i".

15. The image forming method of any one of claims 12 - 14, wherein the read information D (i) corresponding to i-th recording element is acquired from a pixel recorded by the i-th recording element and from other pixel recorded by an adjacent recording element to the i-th recording element.

16. The image forming method of any one of claims 12 - 15, further comprising a step of changing a degree of influence to a pixel recorded by the i-th recording element from other pixel recorded by an recording element in the vicinity of the i-th recording element.

17. The image forming method of any one of claims 12 - 16, further comprising a step of setting the image for correction onto the image reading apparatus by using a pressing member.

18. The image forming method of any one of claims 12 - 17, wherein the image for correction recorded on the photosensitive material is composed of recording lines ranging from 50 to 1000 lines.

19. The image forming method of claim 18, the read information is acquired from not less than 10 % of the recording lines composing the image for correction.

20. The image forming method of any one of claims 12 - 19, wherein the image for correction is recorded onto the photosensitive material comprising silver halide.

21. The image forming method of any one of claims 12 - 20, wherein the image for correction is recorded onto the photosensitive material provided with a reflection support.

22. The image forming method of any one of claims 12 - 21, wherein a value indicated by the read information falls within a large gradient range in a characteristic curve of the photosensitive material.

# FIG. 1

IMAGE DATA

100

30a 30b 30c

40 PRINT HEAD CONTROLLER

70 IMAGE READING APPARATUS

CORRECTION PROCESSOR

60

1 2

TO DEVELOPING PROCESS

# FIG. 2

30a, 30b, 30c

PRINT HEAD

31 SHIFT REGISTER

32 LATCH CIRCUIT

33 DRIVER CIRCUIT

34 RECORDING ELEMENT ARRAY

35 SELFOC LENS ARRAY

DRIVE SIGNAL

IMAGE BIT DATA

SET PULSE SIGNAL

ENABLE SIGNAL

40 PRINT HEAD CONTROLLER

8 BITS IMAGE DATA

CORRECTION AMOUNT

60 CORRECTION PROCESSOR

DENSITY DATA

70 IMAGE READING APPARATUS

# FIG. 3

2a

RECORDING ELEMENT ARRAYING DIRECTION

R(C)
DENSITY MEASUREMENT
POSITION

G(M)
DENSITY MEASUREMENT
POSITION

B(Y)
DENSITY MEASUREMENT
POSITION

## FIG. 4 (a)

2a

MARKER

RECORDING ELEMENT ARRAYING DIRECTION

RGB (CMY) DENSITY MEASUREMENT POSITION

RGB (CMY) DENSITY MEASUREMENT POSITION

## FIG. 4 (b)

RECORDING ELEMENT ARRAYING DIRECTION

2a

DENSITY MEASUREMENT POSITION

MARKER TO IDENTIFY RECORDING ELEMENT OF R (C) HEAD

MARKER TO IDENTIFY RECORDING ELEMENT OF G (M) HEAD

MARKER TO IDENTIFY RECORDING ELEMENT OF B (Y) HEAD

DENSITY MEASUREMENT POSITION

# FIG. 5

```
              ┌─────────────┐
              │    START    │
              └──────┬──────┘
                     ↓
    ┌────────────────────────────────┐
    │ IMAGE INFORMATION (8 BITS) INPUT│ ── S1
    └────────────────┬───────────────┘
                     ↓
    ┌────────────────────────────────┐
    │  TRANSFORMATION OF INPUT IMAGE  │
    │      INFORMATION INTO IMAGE     │
    │   INFORMATION FOR OUTPUT, BASED │ ── S2
    │ ON OUTPUT VALUE TRANSFORMING LUT│
    └────────────────┬───────────────┘
                     ↓
    ┌────────────────────────────────┐
    │ CORRECTION BASED ON LIGHT AMOUNT│
    │     CORRECTION COEFFICIENT      │ ── S3
    └────────────────┬───────────────┘
                     ↓
    ┌────────────────────────────────┐
    │ TRANSMISSION OF IMAGE INFORMATION│
    │    FOR OUTPUT TO PRINT HEAD     │ ── S4
    └────────────────┬───────────────┘
                     ↓
    ┌────────────────────────────────┐
    │   RECORDING INTO PHOTOSENSITIVE │
    │            MATERIAL             │ ── S5
    └────────────────┬───────────────┘
                     ↓
    ┌────────────────────────────────┐
    │     DEVELOPMENT PROCESSING      │ ── S6
    └────────────────┬───────────────┘
                     ↓
    ┌────────────────────────────────┐
    │    COMPLETION OF DEVELOPMENT    │ ── S7
    └────────────────┬───────────────┘
                     ↓
              ┌─────────────┐
              │     END     │
              └─────────────┘
```

# FIG. 6

```
              ┌─────────────┐
              │    START    │
              └─────────────┘
                     │
                     ▼
┌─────────────────────────────────────────────────┐
│   SCANNING ( DENSITY MEASUREMENT / 8BITS )       │─── S10
└─────────────────────────────────────────────────┘
                     │
                     ▼
┌─────────────────────────────────────────────────┐
│ IDENTIFICATION OF POSITION IN IMAGE CORRESPONDING │
│ TO EACH RECORDING ELEMENT (i) , ACCORDING         │─── S11
│ TO MEASUREMENT RESULT OF MARKER SECTION           │
└─────────────────────────────────────────────────┘
                     │
                     ▼
┌─────────────────────────────────────────────────┐
│ IDENTIFICATION OF SCANNER READ VALUE S(i)         │
│ CORRESPONDING TO EACH RECORDING ELEMENT (i)       │─── S12
└─────────────────────────────────────────────────┘
                     │
                     ▼
┌─────────────────────────────────────────────────┐
│ CALCULATION OF READ INFORMATION D (i) = - log ( S (i) / 255) │
│ CORRESPONDING TO EACH RECORDING ELEMENT (i)       │─── S13
└─────────────────────────────────────────────────┘
                     │
                     ▼
┌─────────────────────────────────────────────────┐
│ CALCULATION OF DENSITY E (i) BASED ON READ INFORMATION │─── S14
└─────────────────────────────────────────────────┘
                     │
                     ▼
┌─────────────────────────────────────────────────┐
│ CALCULATION OF AVERAGE VALUE Dave                 │
│ OF READ INFORMATION D (i)                         │─── S15
└─────────────────────────────────────────────────┘
                     │
                     ▼
┌─────────────────────────────────────────────────┐
│ COMPARING AVERAGE VALUE Dave AND DENSITY E (i) OF EACH │
│ RECORDING ELEMENT (i), AND CALCULATING CORRECTION │─── S16
│ AMOUNT C (i) = Dave / E (i) FOR EACH RECORDING ELEMENT (i) │
└─────────────────────────────────────────────────┘
                     │
                     ▼
              ┌─────────────┐
              │     END     │
              └─────────────┘
```

# FIG. 7 ( a )

RECORDING ELEMENT
ARRAYING DIRECTION

# FIG. 7 ( b )

RECORDING ELEMENT
ARRAYING DIRECTION

# FIG. 7 ( c )

RECORDING ELEMENT
ARRAYING DIRECTION

# FIG. 8

# FIG. 9

| NUMBER OF LINES | RATIO TO BE USED (%) | CONTRIBUTION OF NEIGHBORING PIXEL | DENSITY UNEVENNESS |
|---|---|---|---|
| 40 | 75 | EXISTING | C |
| 50 | 75 | EXISTING | B |
| 60 | 75 | EXISTING | A |
| 80 | 75 | EXISTING | A |
| 100 | 75 | EXISTING | A |
| 200 | 75 | EXISTING | B |
| 1000 | 75 | EXISTING | B |
| 1050 | 75 | EXISTING | C |
| 50 | 5 | EXISTING | C |
| 50 | 10 | EXISTING | B |
| 50 | 20 | EXISTING | A |
| 1000 | 80 | EXISTING | A |
| 1000 | 90 | EXISTING | B |
| 1000 | 95 | EXISTING | C |
| 60 | 75 | NOT EXISTING | D |

# FIG. 10

EP 1 462 265 A2